# EUROPÄISCHE PATENTSCHRIFT

(11) **EP 3 318 948 B1**
(45) Veröffentlichungstag und Bekanntmachung des Hinweises auf die Patenterteilung: **29.05.2019**
(21) Anmeldenummer: 17200116.6
(22) Anmeldetag: 06.11.2017
(51) Int. Cl.: G05D 23/19

(54) **HEIZKÖRPERTHERMOSTAT**
RADIATOR THERMOSTAT
THERMOSTAT DE RADIATEUR

(30) Priorität: 04.11.2016 DE 102016121116
(43) Veröffentlichungstag der Anmeldung: 09.05.2018
(73) Patentinhaber: vilisto GmbH, 21079 Hamburg (DE)
(72) Erfinder: BERGER, Christoph, 21073 Hamburg (DE); STEHNKEN, Lasse, 21075 Hamburg (DE)
(74) Vertreter: Schulz Junghans Patentanwälte PartGmbB

(56) Entgegenhaltungen:
- WO-A1-00/26879
- WO-A2-2009/024746
- DE-A1- 4 324 429
- US-A1- 2015 276 237

## Beschreibung

Die Erfindung betrifft ein automatisches Heizkörperthermostat gemäß Anspruch 1, ein Heizungssystem gemäß Anspruch 11, sowie ein Computerprogramm zum automatischen Regeln eines Heizkörpers mit einem erfindungsgemäßen Heizkörperthermostat gemäß Anspruch 14.

In nahezu allen Bereichen wird versucht Energie einzusparen. Großes Energiesparpotenzial liegt dabei im Bereich der Klimatisierung und dabei insbesondere im Bereich des Heizens von Wohn- und Büroräumen.

Üblicherweise wird die Heizleistung eines Heizkörpers dabei über einen am Heizkörper befestigten Heizkörperthermostat eingestellt. Dies geschieht zum überwiegenden Teil noch manuell.

Dadurch wird die Heizleistung eines Heizkörpers oftmals nur dann verändert, wenn die Raumtemperatur zu hoch oder zu niedrig ist; ob überhaupt Personen im Raum anwesend sind, bleibt unberücksichtigt, d.h. der Heizkörper heizt den Raum, obwohl sich unter Umständen niemand darin aufhält, wodurch ein vermeidbarer Energieverbrauch entsteht. Vor dem Hintergrund, dass insbesondere Werktags viele Wohnungen tagsüber leer stehen, und sich nur morgens und abends Personen in den Wohnräumen aufhalten, wurden viele Verfahren und Vorrichtungen erarbeitet, die dieses Problem lösen.

In der DE19548841A1 ist ein Thermostat mit einem Bewegungsmelder offenbart, der durch die Detektion von Bewegung die Anwesenheit von Personen im Raum ermittelt. Dabei ist es nachteilig, dass beispielsweise stillsitzende Personen nicht erfasst werden und die Anwesenheitsbestimmung daher potenziell ungenau ist. Der Bewegungsmelder muss weiterhin freie Sicht auf den zu überwachenden Raum haben. Das heißt, das Thermostat muss so angebracht werden, dass keine Objekte, wie beispielsweise Möbel, vor dem Thermostat stehen, was im Allgemeinen ungünstig ist. Aus dem Stand der Technik ist auch die WO 2009/024746 A2 bekannt.

Aus dem Stand der Technik ist weiterhin die US2015168003A1 und die US20150276237A1 bekannt. Dort ist ein an der Wand befestigtes Thermostat zur Regelung einer Klimaanlage offenbart, welches über ein Mittel zur Anwesenheitserkennung verfügt und so entsprechend die Klimaleistung der Klimaanlage in Abhängigkeit einer Personen-Anwesenheit einstellen kann. Die Anwesenheitsdetektion erfolgt dabei beispielsweise über passive infrared (PIR) Sensoren, die innerhalb des Thermostats angeordnet sind. Das Anbringen des Thermostats an der Wand ist erforderlich, da ansonsten Objekte den Sichtbereich des PIR-Sensors verdecken könnten und somit die Anwesenheit nicht zuverlässig bestimmt werden könnte. Weiterhin ist dieses Thermostat nicht für die Regelung von Heizkörpern einsetzbar, da es weder eine Verbindungsmöglichkeit noch ein Verbindungsmittel zu einem Heizkörperventil besitzt.

Gemäß der Lehre des Standes der Technik ist es notwendig, dass weitere Geräte im gleichen oder in anderen Räumen installiert werden müssen, damit die vorgeschlagenen Lösungen funktionieren. Diese zusätzlichen Geräte müssen oftmals untereinander verkabelt sein, um einen Daten und/oder Energieaustausch zu gewährleisten. Das Thermostat alleine ist nicht in der Lage einen Heizkörper zu regeln, da es keinen Regler oder Stellantrieb für ein Heizkörperventil aufweist. Dies alles führt letztlich zu erhöhten Anschaffungs- und Installationskosten.

Ebenso offenbart die DE4324429A1 und die DE19527745B4 ein Thermostat, das über einen externen Anwesenheitssensor verfügt, der an geeigneter Stelle im Raum angebracht werden kann.

In der DE3147085A1 wird eine Vorrichtung zur Steuerung der Temperatur bei Heizungs- und Klimaanlagen offenbart, wobei eine Anwesenheit ebenso über externe Komponenten ermittelt wird.

Das Problem, dass alle genannten Lösungen gemein haben, ist, dass entweder ein externes Gerät mit entsprechenden Anwesenheitssensoren an geeigneter Stelle im Raum anzubringen ist oder keine Gegenstände vor dem Thermostat anzuordnen sind, um eine freie Sicht auf den Raum zu gewährleisten, bzw. um eine zuverlässige Anwesenheitserkennung zu gewährleisten.

Hiervon ausgehend liegt daher der vorliegenden Erfindung die Aufgabe zugrunde, eine Vorrichtung bereitzustellen, die im Hinblick auf die vorgenannte Problematik verbessert ist.

Diese oben genannten Probleme werden durch ein Heizkörperthermostat mit den Merkmalen des Anspruchs 1, durch ein Heizungssystem mit den Merkmalen des Anspruchs 11 sowie durch ein Computerprogram mit den Merkmalen des Anspruchs 14 gelöst. Weitere vorteilhafte Ausführungsformen sind in den Unteransprüchen aufgeführt.

Gemäß Anspruch 1 ist ein Heizkörperthermostat zum automatischen, insbesondere elektrischen und prädiktiven Regeln der Temperatur oder Heizleistung eines insbesondere warmwassergeführten Heizkörpers beansprucht, wobei das Heizkörperthermostat dazu vorgesehen und eingerichtet ist, an einem Heizkörperventil angebracht zu werden, wobei das Heizkörperthermostat ein Gehäuse aufweist, wobei zumindest die folgenden Komponenten von dem Gehäuse insbesondere vollständig umfasst werden:
- Ein Verbindungsmittel, das dazu ausgebildet ist, das Heizkörperthermostat mit dem Heizkörperventil in Verbindung zu bringen, so dass das Heizkörperventil durch das Heizkörperthermostat regelbar ist,
- ein Regler zum Regeln der Heizleistung eines Heizkörpers über das Heizkörperventil,
- ein Anwesenheitssensor, der dazu ausgebildet ist, eine Anwesenheit einer Person in einer für das Heizkörperthermostat sichtverdeckten Umgebung des Heizkörperthermostats zu detektieren, wobei der Anwesenheitssensor einen Schallsensor aufweist oder wobei der Anwesenheitssensor ein Schallsensor ist,
- ein Temperatursensor, der dazu ausgebildet ist, eine Umgebungstemperatur zu ermitteln,
- wobei das Heizkörperthermostat dazu eingerichtet ist, die ermittelten Sensordaten des Anwesenheitssensors und die ermittelten Sensordaten des Temperatursensors an einen Computer zu übermitteln, und von einem Computer Steuerbefehle für eine prädiktive Steuerung eines Heizkörpers zu empfangen, oder wobei das Heizkörperthermostat dazu eingerichtet ist, die ermittelten Sensordaten des Anwesenheitssensors und die ermittelten Sensordaten des Temperatursensors mit einem im Gehäuse umfassten Computer oder Mikrocontroller zu verarbeiten, wobei der Computer oder Mikrocontroller dazu eingerichtet ist, Steuerbefehle für eine prädiktive Steuerung eines Heizkörpers zu ermitteln, und wobei das Heizkörperthermostat dazu eingerichtet ist, den Heizkörper aufgrund der Steuerungsdaten zu regeln.

Eine prädiktive Steuerung erfolgt dabei insbesondere zwischen einer Anwesenheitstemperatur, die ein Nutzer voreinstellen kann und die eingestellt wird oder bereits herrschen soll, wenn eine Person in der Umgebung ist und einer Abwesenheitstemperatur, die bei Abwesenheit einer Person eingestellt wird. Die Höhe der Abwesenheitstemperatur wird insbesondere werkseitig schon voreingestellt oder wird anhand einer ermittelten Luftfeuchte berechnet und ist niedriger als die Anwesenheitstemperatur.

Das so ausgeführte Heizkörperthermostat löst das erfindungsgemäße Problem dadurch, dass ein Schallsensor integraler Bestandteil des Heizkörperthermostats ist. Dadurch, dass der Schallsensor integraler Bestandteil des Heizkörperthermostats ist, funktioniert der Einbau eines solchen Heizkörperthermostaten besonders einfach. Es muss lediglich das alte Heizkörperthermostat ausgewechselt werden.

Bei dem erfindungsgemäßen Heizkörperthermostat ist demnach vorgesehen, dass der Anwesenheitssensor in das Heizkörperthermostat integriert ist, und insbesondere vollständig vom Gehäuse umfasst wird. Insbesondere ist also nicht vorgesehen, dass eine weitere Komponente, die den Anwesenheitssensor oder eine andere Sensorik zur Anwesenheitsdetektion umfasst, außerhalb des Gehäuses des Heizkörperthermostats angeordnet ist.

Die Regelung des Heizkörpers sowie die Ermittlung einer Anwesenheit und insbesondere die Bestimmung der prädiktiven Regelung erfolgt also insbesondere in derselben Vorrichtung, umfasst von einem Gehäuse.

Als Gehäuse wird im Sinne der Erfindung insbesondere eine Einrichtung verstanden, die dazu ausgebildet ist, die Komponenten des Heizkörperthermostats aufzunehmen, wobei eine solche Einrichtung nicht zwingend einstückig ausgeführt sein muss oder eine durchgehende Wandung aufweisen muss. Vielmehr wird unter einem Gehäuse ein Körper verstanden, der insbesondere den Anwesenheitssensor sowie das Verbindungsmittel aufweist und umfasst.

Da ein externer Sensor bzw. eine externe sensorumfassende Komponente nicht vorgesehen ist, erübrigt sich auch die Anbringung einer externen Vorrichtung im Raum, die einen solchen Sensor umfasst. Weiterhin erlaubt das erfindungsgemäße Heizkörperthermostat, dass Gegenstände, wie beispielsweise Vorhänge oder Möbel, unmittelbar vor dem Heizkörperthermostat, also sichtverdeckend aufgestellt sind. Die Zuverlässigkeit der Anwesenheitsermittlung wird dadurch nicht oder nur unwesentlich beeinträchtigt.

Diese Ausführungsform ist besonders vorteilhaft, da, dadurch, dass keine solche externe Komponente benötigt wird, die Kosten für das System reduziert werden können, was sich positiv auf die Amortisationsdauer, die sich aus dem Preis des Systems und der Einsparung durch das Heizkörperthermostat berechnet wird, auswirkt.

Als Umgebung gilt im Kontext dieser Erfindung insbesondere ein Raum, beispielsweise ein Wohnraum oder Büroraum, in dem das Heizkörperthermostat angeordnet ist. Die Umgebung definiert sich weiterhin über die Empfindlichkeit des Schallsensors, d.h. bis zu welcher Entfernung der Schallsensor noch Geräusche wahrnehmen kann. Üblicherweise ist die Empfindlichkeit eines Schallsensors ausreichend, um Geräusche innerhalb eines Wohnraums zuverlässig zu detektieren. Eine Umgebung umfasst daher insbesondere Räume mit bis zu 50 m², 100 m², 200 m² oder mehr als 300 m².

Der Anwesenheitssensor ist weiterhin dazu ausgelegt, die Anwesenheit einer Person auch dann zu detektieren, wenn der Anwesenheitssensor keine Sichtverbindung zur Umgebung, also beispielsweise zum Wohnraum hat, die Sicht insbesondere zwischen der Person und dem Anwesenheitssensor also verdeckt ist. Der Anwesenheitssensor detektiert natürlich auch dann eine Anwesenheit, wenn die Sicht auf die Umgebung frei ist oder nur teilweise obstruiert ist.

Um eine intelligente Steuerung des Heizkörpers zu ermöglichen, ist das Heizkörperthermostat dazu ausgelegt, mit einem Computer zu kommunizieren. Dieser Computer wird im Folgenden auch als Gateway bezeichnet.

Das Gateway kann eine Vielzahl an Berechnungen anhand der vom Heizkörperthermostat übermittelten Daten vornehmen, wobei insbesondere Lernalgorithmen in vorteilhafter Weise durchgeführt werden können, wodurch eine Anwesenheitswahrscheinlichkeit einer Person für einen zukünftigen Zeitpunkt ermittelt werden kann. Komplementär zur Anwesenheitswahrscheinlichkeit kann auch eine Abwesenheitswahrscheinlichkeit ermittelt werden und anhand dieser eine Heizkörperregelung erfolgen. Ob anhand der Anwesenheits- oder Abwesenheitswahrscheinlichkeit gesteuert wird, ist als äquivalent zu betrachten. Durch die Kommunikation mit dem Gateway kann insbesondere eine prädiktive Steuerung des Heizkörpers durch das Heizkörperthermostat erfolgen, so dass vergleichsweise große Energieeinsparungen möglich werden.

Gemäß einer weiteren Ausführungsform der Erfindung ist der Schallsensor dazu ausgebildet, Schallfrequenzen im Bereich von 10 Hz bis 20.000 Hz zu erfassen. Aber auch Teilbereiche des Frequenzspektrums die besonders günstig erscheinen, wie beispielsweise Frequenzen im Bereich der menschlichen Stimmlage, also insbesondere von 100 Hz bis 400 Hz sind ausreichend.

Zusätzlich oder alternativ zum Schallsensor ist es auch möglich einen Sensor im Ultraschallbereich am Heizkörperthermostat insbesondere im Gehäuse des Heizkörperthermostats anzuordnen. Der Ultraschallsensor kann insbesondere den Nahbereich von bis zu 1,6 m in der Umgebung erfassen.

Gemäß einer weiteren Ausführungsform der Erfindung weist das Heizkörperthermostat einen passiven Infrarotsensor (PIR) auf, wobei insbesondere der Anwesenheitssensor den passiven Infrarotsensor aufweist.

Diese Ausführungsform vereint in vorteilhafter Weise eine Anwesenheitsdetektion basierend auf Schall mit einer Anwesenheitsdetektion basierend auf dem von Personen im Raum emittierten, gestreuten oder reflektierten Lichtstrahlen insbesondere im Bereich des Infrarotspektrums.

Diese sogenannten PIR (passive infrared) Sensoren werden üblicherweise zur Bewegungsdetektion eingesetzt. Hierbei muss zwingend ein direkter Sichtkontakt zwischen dem Sensor und der Person bestehen, damit der PIR Sensor eine Bewegung der Person registriert.

Diese Ausführungsform ist besonders vorteilhaft, da das Heizkörperthermostat durch den PIR Sensor eine Anwesenheitsdetektion robuster ausführen kann. So kann der Sensor bei freier Sicht in den Raum den Schallsensor mit zuverlässigen Bewegungsdetektionen unterstützen.

Gemäß einer weiteren Ausführungsform der Erfindung weist das Heizkörperthermostat einen Lichtsensor, insbesondere zur Detektion von Umgebungslicht (Umgebungslichtsensor) auf, wobei der Lichtsensor insbesondere dazu ausgebildet ist, Licht im für das menschliche Auge sichtbaren, Wellenlängenbereich zwischen 400 nm und 700 nm zu erfassen, wobei insbesondere der Anwesenheitssensor den Lichtsensor aufweist.

Diese Ausführungsform ist besonders vorteilhaft, da das Heizkörperthermostat durch den Lichtsensor eine Anwesenheitsdetektion durch die Umgebungslichtverhältnisse in der Umgebung des Heizkörpers ausführen kann. Insbesondere wenn Gegenstände die Sicht des Heizkörperthermostaten verdecken, und ein PIR Sensor keine aussagekräftigen Ergebnisse mehr liefern kann, kann ein Lichtsensor im Heizkörperthermostat vorteilhaft sein.

Selbst bei verdeckter Sicht in den Raum können Lichtstrahlen weiterhin indirekt durch Reflexionen oder Streuung zu dem Lichtsensor gelangen, sodass bei Veränderung dieser Lichtverhältnisse, beispielsweise durch das Ein- oder Ausschalten des Lichts im Raum auf eine Anwesenheit von Personen geschlossen werden kann. So kann zusätzlich zum Schall bei verdeckter Sicht in den Raum auch eine optische Detektion ermöglicht werden.

Gemäß einer weiteren Ausführungsform der Erfindung ist vorgesehen, dass das Gehäuse eine Energiequelle umfasst, wobei die Energiequelle insbesondere eine Batterie und/oder einen Akku aufweist oder dass die Energiequelle ein Thermoelement oder einen thermoelektrischen Generator aufweist, wobei das Thermoelement oder der thermoelektrische Generator dazu ausgebildet ist, das Heizkörperthermostat mit Energie aus der Wärme des Heizkörpers zu versorgen. Die Ausführungsform mit einem thermoelektrischen Generator ist besonders vorteilhaft, da ein solches Heizkörperthermostat keine eigene Energiequelle aufweisen muss, sondern lediglich durch die Wärme des Heizkörpers oder der Umgebung seinen Energiebedarf deckt. Dadurch kann ein besonders wartungsfreies Heizkörperthermostat realisiert werden.

Gemäß einer weiteren Ausführungsform der Erfindung weist das Gehäuse einen Luftfeuchtigkeitssensor auf, wobei insbesondere der Temperatursensor den Luftfeuchtigkeitssensor aufweist.

Um ein angenehmes Raumklima zu schaffen, ist diese Ausführungsform vorteilhaft, da neben der erfassten Temperatur auch die Luftfeuchte des Raumes erfasst wird. Durch die Erfassung der Raumluftfeuchte kann automatisch eine Mindesttemperatur für den Raum (Absenktemperatur) berechnet werden. Dabei wird insbesondere eine Obergrenze für die relative Luftfeuchte im Raum verwendet, um Wasserausfall aus der Luft an den Wänden und/oder Schimmelbildung zu verhindern. In einem Raum-Klimasystem, das insbesondere über den gleichen Computer gesteuert werden kann, an den die Sensordaten übertragen werden, können diese Werte zudem verwendet werden, um etwaige Befeuchtungseinrichtungen und/oder Belüftungseinrichtungen zu steuern und/oder Empfehlungen für den Bewohner zu geben, wann gelüftet werden sollte, damit eine Schimmelbildung verhindert werden kann.

Gemäß einer weiteren Ausführungsform der Erfindung weist das Gehäuse ein Funkmittel zum Übertragen der Sensordaten des Anwesenheitssensors und/oder der Sensordaten des Temperatursensors und insbesondere zum Übertragen von Sensordaten des Schallsensors, des passiven Infrarotsensors, des Lichtsensors und/oder des Luftfeuchtigkeitssensors, an einen externen Computer, insbesondere an das Gateway, auf, wobei das Funkmittel dazu ausgebildet ist, insbesondere in mindestens einem der Funkfrequenzbereiche zu kommunizieren:
- von 2,3995 GHz bis 2,4845 GHz,
- von 5,150 GHz bis 5,350 GHz,
- von 5,470 GHz bis 5,725 GHz,
- von 57,0 GHz bis 66,0 GHz
- 433 MHz,
- von 850 MHz bis 950 MHz, insbesondere 868 MHz, 869 MHz, 908 MHz, 915 MHz und/oder 921 MHz.

Das Funkmittel ist insbesondere dazu ausgebildet, Daten gemäß einem oder mehrerer standardisierter Übertragungsprotokolle zu übertragen, insbesondere gemäß einem der Übertragungsprotokolle gemäß des IEEE 802.11 oder des IEEE 802.15.4 Standards. Letzterer Standard ist besonders für datenarme, energiesparende Informationsübertragung geeignet und auch unter dem Begriff ZigBee bekannt. Weiterhin arbeitet ZigBee auch auf den Frequenzbändern von 2,4 GHz, 915 MHz und 868 MHz.

Alle europäischen Länder sowie ein großer Teil der asiatischen Länder verwenden die von der Organisation CEPT freigegebene Frequenz des SRD-Bandes von 868,4 MHz bzw. 869 MHz. Alternative Frequenzen in Nordamerika liegen im ISM-Band bei 908 MHz oder in Südamerika bei 921 MHz. Mit einem Funkmittel, das zumindest einige der oben aufgeführten Frequenzen bedienen kann, ist das erfindungsgemäße Heizkörperthermostat geeignet, in großen Teilen der Welt zum Einsatz zu kommen.

Gemäß einer weiteren Ausführungsform der Erfindung weist das Heizkörperthermostat mindestens eine Platine auf, die insbesondere vollständig im Gehäuse angeordnet ist und von dem Gehäuse vollständig umfasst wird, und auf der der Schallsensor, und der Temperatursensor, insbesondere der Luftfeuchtigkeitssensor, der Lichtsensor, der PIR Sensor, und/oder das Funkmittel angeordnet ist.

Eine Platine ist insbesondere eine Leiterplatine, auf der insbesondere elektrische und elektronische Komponenten fest verankert sind.

Diese Ausführungsform der Erfindung ist besonders vorteilhaft, da alle Sensoren auf der Platine angeordnet sein können und somit die Integration aller Sensoren in das Heizkörperthermostat besonders gut verwirklicht ist. Insbesondere sind die Fertigungskosten einer Platine im Vergleich zu den Fertigungskosten einer vollständigen externen Vorrichtung deutlich geringer.

In einer Variante der Erfindung können der Schall-, Temperatur-, Luftfeuchtigkeits-, und/oder der Lichtsensor sowie das Funkmittel auf einer Vielzahl beispielsweise auf zwei Platinen angeordnet sein.

Gemäß einer weiteren Ausführungsform der Erfindung ist das Heizkörperthermostat dazu ausgebildet, insbesondere eine Grobauswertung der Sensordaten durchzuführen, die Sensordaten und/oder die Grobauswertung an den Computer zu übersenden und Steuerbefehle von dem Computer zu empfangen und diese auszuführen. Dazu weist das Heizkörperthermostat insbesondere einen Mikrocontroller auf, wobei auf diesem Mikrocontroller insbesondere nur Rechenoperationen ausgeführt werden, die vergleichsweise Energie sparsam sind, um den Energiebedarf des Heizkörperthermostaten zu reduzieren.

Gemäß einer weiteren Ausführungsform der Erfindung weist das Gehäuse ein Einstellmittel, insbesondere einen drehbaren Einstellring oder ein Rad auf. Das Einstellmittel kann dazu verwendet werden, ein Heizkörperventil zu steuern, oder eine Anwesenheitstemperatur und/oder Abwesenheitstemperatur zu definieren, insbesondere um diese als vordefinierte Temperatur festzulegen, insbesondere ohne dass ein Heizkörperventil direkt angesteuert wird.

Gemäß einer weiteren Ausführungsform der Erfindung ist das Verbindungsmittel dazu eingerichtet, eine mechanische Verbindung zu einem Heizkörperventil herzustellen.

Eine derartige mechanische Verbindung erschöpft sich insbesondere nicht in einem elektrischen Verbindungskabel, sondern dient insbesondere dazu, das Heizkörperthermostat stabil an ein Heizkörperventil anzubringen.

Dadurch wird erreicht, dass die integrative und kompakte Bauweise des Heizkörperthermostats, dazu genutzt werden kann, beispielsweise einen mechanischen, konventionellen Heizkörperregler einfach auszutauschen.

In der folgenden Ausführungsform der Erfindung wird dieser Austausch insbesondere durch das Verwenden von normierten Schraub- und Rasteinrichtungen erleichtert. Danach weist das Verbindungsmittel ein Schraub- oder Rastmittel auf, mit dem das Heizkörperthermostat direkt mit einem entsprechenden Gegenstück eines Heizkörperventils befestigt werden kann.

Das Anschrauben oder Einrasten kann auf einen dafür vorgesehenen Adapter am oder direkt auf das Heizkörperventil erfolgen. Der Austausch bestehender Heizkörperthermostaten ist also besonders einfach und kann insbesondere auch ohne Fachmann vorgenommen werden.

Weiterhin ist bei der Installation keinerlei Verkabelung mit anderen Geräten vorzunehmen, da dies bereits durch die direkte, insbesondere kraftschlüssige Verbindung des Heizkörperthermostats mit dem Heizkörper erreicht wird.

Gemäß einer weiteren Ausführungsform der Erfindung ist der Regler dazu eingerichtet, ein Kraft und/oder ein Drehmoment auf ein Betätigungselement des Heizkörperventils auszuüben, mit dem bzw. der die Heizleistung eines Heizkörpers über die Betätigung des Heizkörperventils gesteuert wird.

Diese Variante verdeutlicht die Anbauweise des Heizkörperthermostats direkt am Heizkörperventil. Durch diese Anbauweise erübrigt sich die Anbringung weiterer Komponenten im Raum oder in anderen Räumen.

Das erfindungsgemäße Heizkörperthermostat benötigt insbesondere keine weiteren, externen Steuerungseinheiten oder externen Sensoren. Dies führt zu Vorteilen bei den Kosten, der Installation und der Verwendung des erfindungsgemäßen Heizkörperthermostats gegenüber bestehenden Lösungen.

Gemäß einer weiteren Ausführungsform der Erfindung weist das Heizkörperthermostat, insbesondere das Gehäuse eine Frontseite und eine Umfangsseite auf, wobei die Frontseite und die Umfangsseite in unterschiedliche Richtungen weisen, wobei der zumindest eine passive Infrarotsensor so angeordnet ist, dass ein Sensorbereich des passiven Infrarotsensors sich durch die Frontseite hindurch oder durch einen Bereich der Umfangsseite hindurch erstreckt.

Die Frontseite befindet sich insbesondere gegenüber dem Verbindungsmittel. Auf der Frontseite kann sich ein Einstellring und Anzeigeelemente befinden.

Das Heizkörperthermostat kann beispielsweise zumindest Bereichsweise eine zylinderförmige Außenkontur aufweisen, die Frontseite entspricht dabei insbesondere der Kopffläche des zylinderförmigen Heizkörperthermostats und die Umfangsseite dem Zylindermantel des Heizkörperthermostats.

Auch auf der Umfangsseite können ein oder mehrere Anzeigeelemente, z.B. eine LED Anzeige, angeordnet sein.

Unabhängig von der Einbausituation des Heizkörperthermostats sollte der passive Infrarotsensor so am Heizkörper ausgerichtet ist, dass er in den zu überwachenden Raum zeigt.

Wenn das Heizkörperthermostat mit der Frontseite in den Raum weist, sollte der passive Infrarotsensor ebenfalls in den Raum weisen und daher einen Sensorbereich aufweisen, der durch die Frontseite hindurch weist. Der passive Infrarotsensor ist daher insbesondere an der Frontseite des Heizkörperthermostats angeordnet. Wenn jedoch die Montagesituation so ist, dass das Heizkörperthermostat mit seiner Frontseite nicht in den Raum weist, sondern beispielsweise entlang einer Erstreckungsrichtung des Heizkörpers entlang einer Wand, so sollte der passive Infrarotsensor mit seinem Sensorbereich nicht durch die Frontseite hindurch weisen sondern eben durch einen Bereich der Umfangsseite, damit eine Raumüberwachung erfolgreich durchgeführt werden kann. Durch entsprechendes Drehen des Heizkörperthermostats entlang der Ventilachse des Heizkörpers kann der passive Infrarotsensor entsprechend ausgerichtet werden.

In welche Richtung das Heizkörperthermostat relativ zum Raum ausgerichtet ist wird durch das Heizkörperventil und die Anordnung des Heizkörpers bestimmt und kann nicht frei bestimmt werden.

Diese Ausführungsform des Heizkörperthermostats ermöglicht ein Heizkörperthermostat, das unabhängig von der Einbausituation eines Heizkörpers funktioniert. Es werden insbesondere keine Richtungsadapter oder ähnliches benötigt, um die korrekte Ausrichtung des passiven Infrarotsensors zu ermöglichen. Gemäß einer weiteren Ausführungsform der Erfindung weist das Heizkörperthermostat zwei passive Infrarotsensoren auf, deren jeweilige Sensorbereiche in unterschiedliche Richtungen weisen, wobei die Sensorbereiche insbesondere in 90° unterschiedliche Richtungen weisen, wobei sich insbesondere ein erster Sensorbereich eines ersten Sensors der zwei passiven Infrarotsensoren durch die Frontseite und ein zweiter Sensorbereich eines zweiten Sensors der zwei passiven Infrarotsensoren durch einen Bereich der Umfangsseite erstreckt.

Diese Variante der Erfindung erlaubt die Herstellung eines einzigen Heizkörperthermostats, das für jede der bereits oben beschriebenen Einbausituationen des Heizkörperthermostats einsetzbar ist.

Das erfindungsgemäße Problem wird weiterhin durch ein Heizungssystem, aufweisend zumindest einen Heizkörper mit einem erfindungsgemäßen Heizkörperthermostat, sowie einen externen Computer, gelöst, wobei das Heizkörperthermostat und der Computer dazu ausgebildet sind, über Funk Daten auszutauschen, wobei die Daten zumindest die ermittelten Sensordaten des Anwesenheitssensors und des Temperatursensors umfassen, und wobei der Computer dazu ausgebildet ist, anhand der Sensordaten einen insbesondere dynamischen Heizkalender für zukünftige Zeitpunkte insbesondere selbstständig zu erlernen und zu erstellen und entsprechende Steuerbefehle an das Heizkörperthermostat per Funk zu übermitteln.

In einem dynamischen Heizkalender sind die Heizdaten veränderbar und somit dynamisch. D.h. insbesondere auch wenn für bestimmte Kalenderdaten bereits eine Anwesenheitswahrscheinlichkeit oder eine Heiztemperatur ermittelt wurde, kann diese durch neue Sensordaten jederzeit verändert werden.

Als Computer, wird im Kontext dieser Erfindung insbesondere eine Vorrichtung verstanden, die dazu eingerichtet ist, ein bereitgestelltes oder integriertes Computerprogramm auszuführen und/oder die dazu eingerichtet ist, mit einem Datenspeicher zu kommunizieren oder diesen anzusteuern, und/oder die dazu eingerichtet ist, insbesondere elektronische Ein- und Ausgänge einer Vorrichtung, sogenannte "Ports", anzusteuern und auszulesen. Weiterhin wird als Computer auch eine Vielzahl von Prozessoren, Mikroprozessoren oder Computer bezeichnet, die miteinander verbunden sind und/oder untereinander kommunizieren können, wobei die Vielzahl an Prozessoren, Mikroprozessoren oder Computer insbesondere zumindest teilweise ihre Ressourcen, wie zum Beispiel Speicherplatz oder Rechenleistung untereinander teilen können.

Unter einem Heizkalender werden im Sinne der Erfindung Daten verstanden, die insbesondere gelernte Anwesenheitsdaten und Anwesenheitswahrscheinlichkeiten und/oder Temperaturinformationen enthalten, wobei diese Informationen einen zeitlichen Bezug aufweisen, d.h. die Informationen beziehen sich auf zukünftige, vergangene und/oder wiederkehrende Zeitpunkte, wie sie beispielsweise in einem Kalender eintragbar sind.

Das erfindungsgemäße System ist aufgrund des Computers in der Lage, eine Aufenthaltswahrscheinlichkeit einer Person in einer Umgebung, hier insbesondere in einem Wohnraum oder eines Büros, vorherzusagen, sofern der Computer insbesondere mit einer entsprechenden Software ausgestattet ist. Die Software ermöglicht es, anhand der Anwesenheit einer Person zu vergangenen Zeitpunkten in der Umgebung eine Anwesenheitswahrscheinlichkeit für die Zukunft zu ermitteln. Durch die Ermittlung der Anwesenheitswahrscheinlichkeit kann ein Heizkalender erstellt werden, wobei beispielsweise bei einer ausreichend hohen Anwesenheitswahrscheinlichkeit von beispielsweise mehr als 30%, der Computer Steuersignale an das Heizkörperthermostat übermittelt, so dass die Temperatur in der Umgebung auf eine insbesondere vom Benutzer zuvor eingestellte oder eine anhand der Anwesenheitswahrscheinlichkeit berechneten Aufenthaltstemperatur durch die Regelung der Heizleistung des Heizkörpers eingestellt wird.

Zu Zeitpunkten, in denen der Heizkalender eine Anwesenheitswahrscheinlichkeit ermittelt, die den Schluss nahelegt, dass sich zu diesem zukünftigen Zeitpunkt keine Person in der Umgebung aufhalten wird, übermittelt der Computer Steuerdaten an das Heizkörperthermostat, so dass die Temperatur in der Umgebung auf eine insbesondere durch die Einbeziehung von Sensordaten des Feuchtigkeitssensors berechnete, minimale Temperatur, auch Absenktemperatur oder Abwesenheitstemperatur genannt, eingestellt wird. Diese Abwesenheitstemperatur kann in Abhängigkeit der energieoptimalen Regelung des Heizkörpers auch höher liegen, wenn beispielsweise zu einem Zeitpunkt in naher Zukunft die Anwesenheitstemperatur erreicht sein soll, oder aus anderen Gründen eine höhere Temperatur gewährleistet sein soll.

Die energieoptimale Regelung eines Heizkörpers berechnet sich dabei aus verschiedenen Einflussgrößen. Beispielsweise können über ein in der Software hinterlegtes, physikalisches Raummodell und durch vergangene Messungen der Raumtemperatur und/oder der vergangenen Außenklimabedingungen, insbesondere Temperatur und Sonnenintensität sowie Bewölkung, beispielsweise durch aktuelle und/oder zukünftige Wetterdaten, die physikalischen Parameter des jeweiligen Raumes, insbesondere Wärmekapazitäten, Wärmeverluste, Zeitkonstanten und/oder Wärmedurchgangswiderstände, und/oder die Heizleistung des Heizkörpers und/oder dessen Zeitkonstante gelernt und abgeschätzt werden. Aufgrund dieser Informationen ist es möglich über modellprädiktive Regelalgorithmen den optimalen Betrieb des Heizkörpers, in Abhängigkeit von verschiedenen Parametern wie beispielsweise der Anwesenheitswahrscheinlichkeit, der eingestellten An- oder Abwesenheitstemperstur, dem Energieverbrauch des Heizkörperthermostats und weiteren Parametern, zu gewährleisten.

Als Anwesenheitswahrscheinlichkeit kann dabei eine Größe dienen, die anhand ihrer Größe widerspiegelt, wie wahrscheinlich es ist, dass sich zu einem bestimmten Zeitpunkt eine Person in der Umgebung des Heizkörperthermostats aufhält.

Die genaue Ausgestaltung der Software und damit letztlich die Steuerung des Heizkörperthermostaten kann sehr vielfältig und an viele verschiedene Parameter gebunden sein.

Beispielsweise ist es auch möglich Daten aus der Wettervorhersage mit in die aktuelle Regelung und Temperaturvorgabe einzubeziehen, so dass insbesondere die Steuersignale für die Regelung des Heizkörpers an besonders sonnenreichen Tagen so angepasst werden können, dass weniger Heizleistung vom Heizkörper abgegeben wird, während weiterhin die eingestellte und/oder gewünschte An- oder Abwesenheitstemperatur bereitgestellt wird.

Der Datenaustausch des Heizkörperthermostaten mit dem Computer erfolgt insbesondere über das Funkmittel im Heizkörperthermostaten und ein entsprechendes Funkmittel im Computer. Das Heizkörperthermostat übermittelt insbesondere die vom Temperatursensor ermittelten Temperaturdaten sowie die Daten des Schallsensors und gegebenenfalls weitere Sensordaten von weiteren Sensoren, so dass der Computer anhand dieser Daten die Anwesenheitswahrscheinlichkeit einer Person in der Umgebung des Heizkörperthermostaten und gegebenenfalls weitere Parameter wie beispielsweise die eingestellte und/oder optimale Absenktemperatur, abhängig von verschiedenen Parametern, ermitteln kann.

Gemäß einer weiteren Ausführungsform der Erfindung, weist der Computer eine Software auf, wobei die Software dazu eingerichtet ist, die folgenden Schritte auszuführen, wenn sie auf dem Computer ausgeführt wird:
- Regelmäßiges Überprüfen einer Anwesenheit einer Person in einer Umgebung des Heizkörperthermostats mit dem Anwesenheitssensor, wobei das regelmäßige Überprüfen insbesondere genau einmal pro Minute für weniger als eine Sekunde durchgeführt wird,
- Übermitteln der Sensordaten des Anwesenheitssensors und insbesondere der Sensordaten des Temperatursensors an den Computer, insbesondere per Funk,
- Ermitteln einer Anwesenheitswahrscheinlichkeit einer Person in der Umgebung des Heizkörperthermostats für zumindest einen, insbesondere 15 min bis 60 min, 24 Stunden, eine Woche oder einen Monat in der Zukunft liegenden Zeitpunkt anhand der Sensordaten des Anwesenheitssensors durch den Computer,
- Bestimmen und Übermitteln eines von dem Computer generierten Steuerbefehls an das Heizkörperthermostat zum Regeln des Heizkörpers mit dem Heizkörperthermostat, wobei der Heizkörper so geregelt wird, dass beim Erreichen des vordefinierten zukünftigen Zeitpunkts, eine vordefinierte Temperatur im Raum herrscht, wobei insbesondere die vordefinierte Temperatur in Abhängigkeit der Anwesenheitswahrscheinlichkeit und einer vordefinierten Anwesenheits- und/oder vordefinierten Abwesenheitstemperatur ermittelt wird.

Ein regelmäßiges Überprüfen findet insbesondere in gleichmäßigen Abständen statt, oder in Abhängigkeit der Anwesenheitswahrscheinlichkeit oder einer vom Anwesenheitssensor registrierten Anwesenheit. Wenn beispielsweise eine Anwesenheitswahrscheinlichkeit einen gewissen Wert überschreitet, oder wenn der Anwesenheitssensor eine Anwesenheit registriert, dann kann eine Überprüfung der Anwesenheit in kurzen, minütlichen Intervallen stattfinden, während hingegen bei einer vermuteten Abwesenheit die Frequenz der Überprüfung geringer sein kann. Zwischen den Überprüfungen kann der Anwesenheitssensor ausgeschaltet sein oder auf Stand-by stehen, so dass möglichst wenig Energie durch den Anwesenheitssensor verbraucht wird.

Eine Umgebung kann hier identisch wie weiter oben definiert werden. Danach ist eine Umgebung insbesondere ein Wohnraum oder ein Büroraum.

Das erfindungsgemäße Problem wird weiterhin mit einem Computerprogramm oder einem Verfahren zum automatischen Regeln eines Heizkörpers mit einem erfindungsgemäßen Heizkörperthermostat gelöst, wobei das Computerprogramm Computerprogrammcode aufweist, und folgende Schritte ausführt, wenn das Computerprogramm auf einem Computer ausgeführt wird. Entsprechend werden durch ein Verfahren ebenfalls die folgenden Schritte ausgeführt:
- Regelmäßiges Überprüfen einer Anwesenheit einer Person in einer Umgebung des Heizkörperthermostats mit dem Anwesenheitssensor, wobei das regelmäßige Überprüfen insbesondere genau einmal pro Minute für weniger als eine Sekunde durchgeführt wird,
- Übermitteln der Sensordaten des Anwesenheitssensors und insbesondere der Sensordaten des Temperatursensors an den Computer, insbesondere per Funk,
- Ermitteln einer Anwesenheitswahrscheinlichkeit einer Person in der Umgebung des Heizkörperthermostats für zumindest einen, insbesondere 15 min bis 60 min, 24 Stunden, eine Woche oder einen Monat in der Zukunft liegenden Zeitpunkt anhand der Sensordaten des Anwesenheitssensors durch den Computer,
- Bestimmen und Übermitteln eines von dem Computer generierten Steuerbefehls an das Heizkörperthermostat zum Regeln des Heizkörpers mit dem Heizkörperthermostat, wobei der Heizkörper so geregelt wird, dass beim Erreichen des vordefinierten zukünftigen Zeitpunkts, eine vordefinierte Temperatur im Raum herrscht, wobei insbesondere die vordefinierte Temperatur in Abhängigkeit der Anwesenheitswahrscheinlichkeit und einer vordefinierten Anwesenheits- und/oder vordefinierten Abwesenheitstemperatur ermittelt wird.

Für das Computerprogramm und das Verfahren gelten die gleichen Definitionen und Beispiele von Ausführungsformen wie sie bereits oben aufgeführt wurden.

Als Computerprogramm, Software oder Softwarecode werden gleichbedeutend eine oder mehrere Anweisungen oder Befehle bezeichnet, die einen Computer oder Mikroprozessor veranlassen, eine Reihe von Operationen durchzuführen, die insbesondere einen Algorithmus und/oder andere Verarbeitungsmethoden darstellen. Das Computerprogramm kann auf einem Medium wie beispielsweise RAM, ROM, einer SD-Karte, einer Speicherkarte, einer Flash-Speicherkarte, einer Disc, oder in einem integrierten Schaltkreis abgespeichert und auslesbar sein, und insbesondere durch einen Computer ausgeführt werden.

Im Folgenden werden anhand einer Figurenbeschreibung und weiteren Beispielen weitere Ausführungsformen der Erfindung beschrieben, wobei deren Merkmale einzeln oder in Kombination als zur Erfindung gehörig gelten können. Dabei zeigen
- Fig. 1: ein erfindungsgemäßes Heizkörperthermostat;
- Fig. 2: eine Schnittansicht durch ein Heizkörperthermostat;
- Fig. 3: ein erfindungsgemäßes Heizungssystem;
- Fig. 4: ein mit einem erfindungsgemäßen Heizungssystem ausgestattetes Gebäude;
- Fig. 5: eine Seitenansicht des Heizkörperthermostats mit Verbindungsmittel;
- Fig. 6: ein Heizungssystem mit rechtwinkliger und paralleler Heizkörperventilkonfiguration ;
- Fig. 7: zwei Explosionsdarstellungen eines Heizkörperventils; und
- Fig. 8: eine Ansicht der Elektronik des Heizkörperventils.

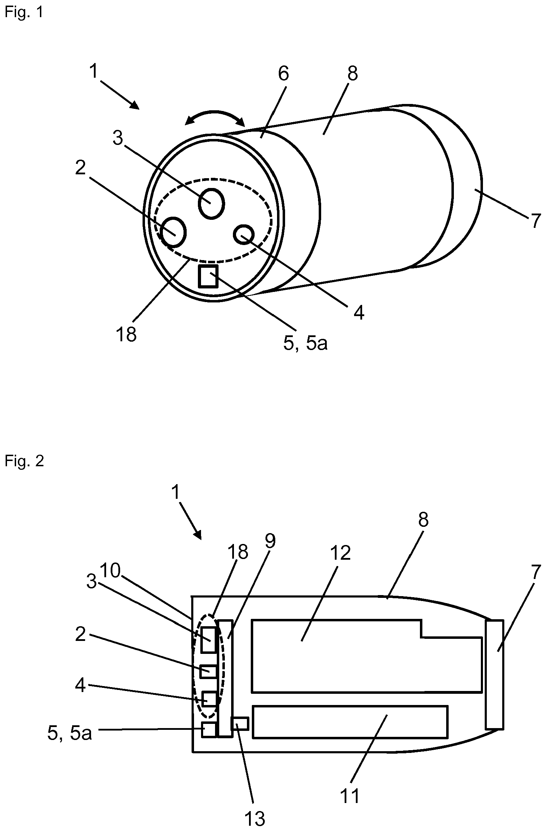

Fig. 1 und Fig. 2 zeigen das erfindungsgemäße Heizkörperthermostat 1. In Fig. 1 ist das Heizkörperthermostat 1 in einer perspektivischen Ansicht und in Fig. 2 in einer Schnittansicht abgebildet.

Das Heizkörperthermostat 1 weist ein im Wesentlichen zylindrisch ausgeformtes Gehäuse 8 auf, das in einem vorderen Bereich einen drehbaren Einstellring 6 aufweist. Der Einstellring 6 kann dazu verwendet werden, ein Heizkörperventil zu regeln, oder eine Anwesenheitstemperatur und/oder Abwesenheitstemperatur zu definieren, insbesondere um diese als vordefinierte Temperatur festzulegen, insbesondere ohne dass ein Heizkörperventil direkt angesteuert wird.

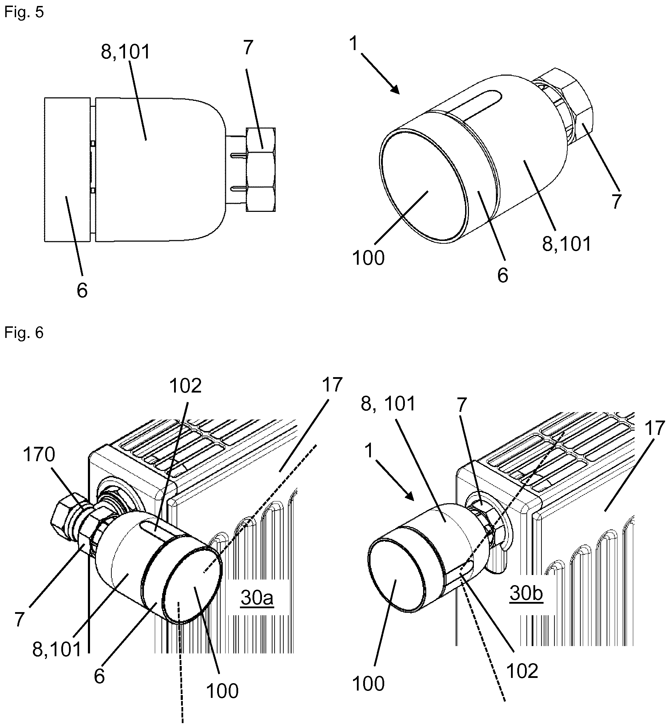

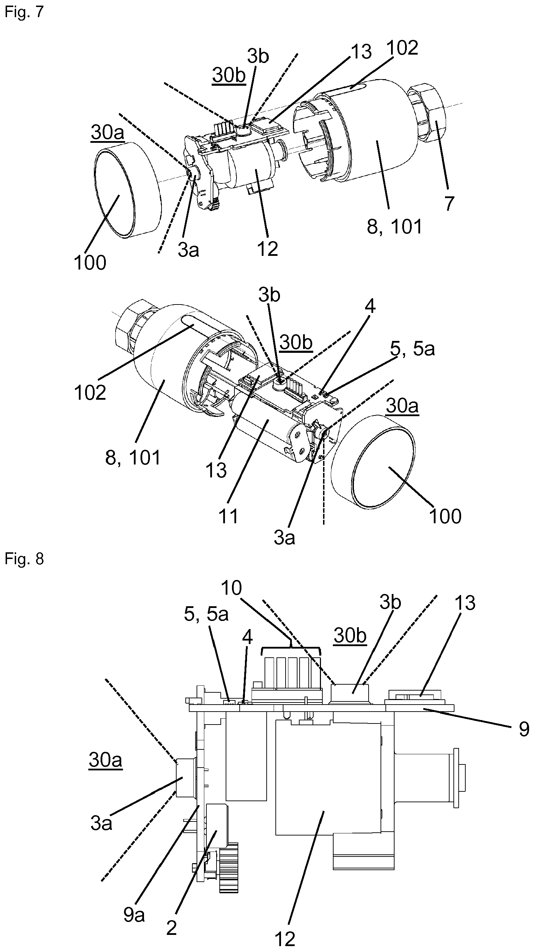

Auf einer Frontseite des Heizkörperthermostaten 1 sind eine Vielzahl von Sensoren 2, 3, 4, 5, 5a angeordnet. Die Frontseite (100) oder die Umgangsseite (101) (siehe Fig. 5 und Fig. 7) umfasst dabei auch Anzeigeelemente 10, mit denen die aktuelle Temperatur, der Betriebszustand oder andere Informationen eingeblendet werden können.

Die Sensoren 2, 3, 4, 5, 5a hier ein PIR-Sensor 3, ein Schallsensor 2, und ein Umgebungslichtsensor 4, befinden sich an zentraler Stelle an der Frontseite (100) und bilden einen Anwesenheitssensor 18 (dargestellt durch den Bereich umfasst durch die gestrichelte Linie).

Des Weiteren - viereckig dargestellt - ist ein Temperatur 5 - und Feuchtigkeitssensor 5a im Heizkörperthermostaten 1 angeordnet. Alle Sensoren 2, 3, 4, 5, 5a sind innerhalb des Gehäuses 8 auf einer Platine 9 angeordnet.

Auf einer hinteren Seite des Heizkörperthermostaten befindet sich ein Anschluss 7 für ein Heizkörperventil eines Heizkörpers. Dort ist auch ein Regler 12, in Form eines Motors und eines Getriebes für das Heizkörperventil angeordnet, so dass mit dem Heizkörperthermostat 1 ein Heizkörper 17 gesteuert werden kann.

Vom Gehäuse 8 des Heizkörperthermostaten 1 sind weiterhin Batterien 11 umfasst, die als Energieversorgung für das Heizkörperthermostat 1, insbesondere die Vielzahl an Sensoren 2, 3, 4, 5, 5a dient.

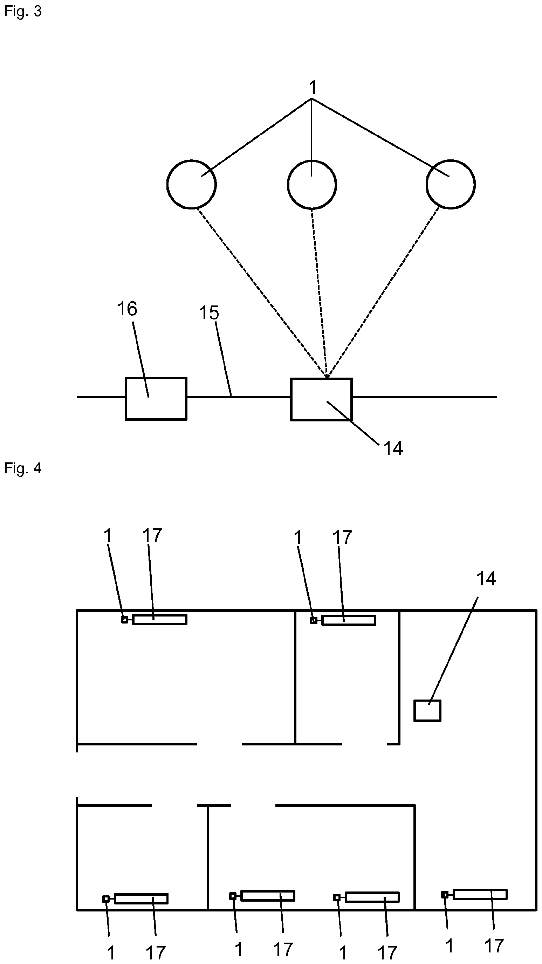

Ebenso vom Gehäuse 8 umfasst, ist ein auf der Platine 9 angeordnetes Funkmittel 13 und die Elektronik. Zum Betreiben des erfindungsgemäßen Heizkörperthermostaten 1 können Sensordaten vom Heizkörperthermostaten 1 über das Funkmittel 13 an einen externen Computer 14, das Gateway, übermittelt werden (siehe auch Fig. 3).

Es ist festzuhalten, dass alle Sensoren 2,3 ,4 ,5, 5a vollständig vom Gehäuse 8 des Heizkörperthermostaten 1 umfasst sind, und es keinerlei externe Sensoren bedarf, die an einer anderen Stelle im Raum angeordnet werden müssen. Dies ist besonders vorteilhaft, da sich das Heizkörperthermostat 1 dadurch besonders leicht handhaben lässt, und insbesondere hinsichtlich einer Umrüstung von herkömmlichen Heizkörperthermostaten auf die erfindungsgemäßen Heizkörperthermostaten 1 der Aufwand minimiert ist.

In Fig. 3 ist schematisch ein Heizungssystem abgebildet, das zur Steuerung einer Vielzahl von erfindungsgemäßen Heizkörperthermostaten 1 verwendet werden kann. Das System umfasst dabei einen externen Computer 14, das Gateway, der insbesondere über ein sogenanntes ZigBee Protokoll mit einer Vielzahl, hier drei, Heizkörperthermostaten 1 über Funk (als gestrichelte Linien dargestellt) kommunizieren kann. Über die Funk-Verbindung werden die Sensordaten ausgetauscht, sowie Steuerbefehle an die Heizkörperthermostate 1 übermittelt. Der Computer 14 erfasst die Daten aller drei Heizkörperthermostate 1 und kann individuell für jede Umgebung der Heizkörperthermostate 1 eine optimale und energieeffiziente Regelung berechnen und festlegen.

Der Computer 14 ist weiterhin über eine LAN oder WLAN Verbindung 15 mit einem Router 16 verbunden, so dass ein Zugang zum Internet möglich ist, ebenso kann auch eine Verbindung mit einem Mobilfunknetz mit entsprechenden Mitteln hergestellt werden. Dadurch können weitere Informationen wie beispielsweise Wettervorhersagedaten oder ähnliches bei der Berechnung einer Anwesenheitswahrscheinlichkeit bzw. einer einzustellenden Temperatur oder Heizleistung mit einbezogen werden.

In Fig. 4 ist schematisch ein Wohnungsquerschnitt oder ein Gebäudequerschnitt gezeigt, der in jedem Raum einen Heizkörper 17 aufweist, der mit dem erfindungsgemäßen Heizkörperthermostaten 1 ausgestattet ist. An anderer Stelle in der Wohnung oder im Gebäude steht ein Computer 14, der in dem Heizungssystem die Steuerung der Heizkörperthermostaten 1 übernimmt. So kann in jedem der Räume der Wohnung oder des Gebäudes zeitlich unabhängig eine Temperatur eingestellt werden. Die Ermittlung der einzustellenden Temperatur erfolgt wie oben beschrieben anhand einer ermittelten Anwesenheitswahrscheinlichkeit und den übermittelten Steuerbefehlen zur Regelung des Heizkörpers 17.

Die Erfindung ermöglicht daher insbesondere eine vorteilhafte, prädiktive Steuerung der Raumtemperatur, wobei dazu lediglich ein vollständig integriertes Heizkörperthermostat 1 nötig ist, das alle notwendigen Sensoren umfasst.

In Fig. 5 sind eine seitliche Ansicht (links) sowie eine perspektivische Ansicht (rechts) eines Heizkörperthermostats 1 zu sehen. Das Heizkörperthermostat 1 verfügt über ein Verbindungsmittel 7, das über ein Schraubmittel, hier ein Gewinde mit einer Achtkant-Außenkontur, auf ein konventionelles Heizkörperventil 170 (nicht dargestellt) anschraubbar ist, so dass durch den Regler (nicht dargestellt) eine Kraft bzw. ein Drehmoment auf einen Ventilstift des Heizkörpers aufbringbar ist. So erfolgt die Regelung der Heizleistung des Heizkörpers. Weiterhin sind das Gehäuse 8 des Heizkörperthermostats und der Einstellring 6 zu sehen. Das Verbindungsmittel 7 befindet sich also an einem hinteren Ende des Heizkörperthermostats 1, so dass der Einstellring 6 gut zugänglich ist.

In Fig. 6 sind zwei unterschiedliche erfindungsgemäße Heizungssysteme abgebildet. Jedes Heizungssystem umfasst einen Heizkörper 17 mit einem Heizkörperventil 170 sowie das Heizkörperthermostat 1.

Das Heizkörperthermostat 1 ist auf das Heizkörperventil 170 mit dem Verbindungelement 7 mechanisch fest aufgeschraubt, so dass der Regler 12 (nicht dargestellt) den Ventilstift (nicht zu sehen) des Heizkörperventils 170 durch Aufbringen einer Kraft betätigen kann, um den Heizkörper 17 zu regeln. Das erfindungsgemäße Heizungssystem kann mit einem erfindungsgemäßen Computerprogram gesteuert werden. Dafür kann das jeweilige Heizungssystem eine externe Recheneinheit (nicht dargestellt), wie etwa einen Computer 14 aufweisen.

In der linken Abbildung in Fig. 6 weist das Heizkörperthermostat 1 mit seiner Frontseite 100 in den zu überwachenden Raum hinein. Die Umfangsseite 101 des Heizkörperthermostats 1 verläuft orthogonal zur Frontseite 100. In dieser Konfiguration sollte zumindest ein passiver Infrarotsensor (nicht sichtbar) mit seinem Sensorbereich 30a (gestrichelte Linien) durch die Frontseite 100 hindurch messen. In der Konfiguration auf der rechten Seite von Fig. 6, ist ein Heizkörper 17 zu sehen, dessen Ventilachse entlang der der Erstreckungsrichtung des Heizkörpers 17 angeordnet ist. Das aufgeschraubte Heizkörperthermostat 1 erstreckt sich folglich ebenso entlang dieser Ventilachse. Bei dieser Konfiguration sollte der passive Infrarotsensor (nicht sichtbar) mit seinem Sensorbereich 30b (angedeutet durch die gestrichelten Linien) durch die Umfangsseite 101 hindurch messen, so dass der zu überwachende Raum erfasst werden kann. Da das Heizkörperthermostat 1 bei der Montage an das Heizkörperventil 170 um die Ventilachse solange drehbar ist, bis die Schraubverbindung 7 angezogen wird, kann der passive Infrarotsensor 3b mit seinem Sensorbereich 30b ausgerichtet werden. Um den Durchtrittsbereich 102 des Sensorbereichs 30b auf der Umfangsseite 101 anzuzeigen, kann auf dem Gehäuse 8 der Durchtrittsbereich 102 entsprechend hervorgehoben sein - beispielsweise durch die Verwendung eines anderen Materials oder einer farblichen oder strukturellen Hervorhebung auf dem Gehäuse 8. Im dargestellten Beispiel ist der Durchtrittsbereich 102 ein Bauteil, das eine Fresnel Linse für den passiven Infrarotsensor 3b sowie fünf Sichtpunkte für die LED Anzeige 10 umfasst. Für die Detektion mit dem passiven Infrarotsensor 3b muss das Material im Bereich 7-14 µm transparent sein. Dies wird durch ein spezielles Material ermöglicht. Die Erscheinungsform des Materials im sichtbaren Spektrum ist dennoch weiß.

In Fig. 7 sind zwei Explosionsdarstellungen des erfindungsgemäßen Heizkörperthermostats 1 dargestellt. Die Elektronik, die vom Gehäuse 8 umfasst wird, ist separat noch einmal in Fig. 8 dargestellt. Das Heizkörperthermostat 1 weist in dieser Variante zwei passive Infrarotsensoren 3a, 3b auf, wobei der erste Infrarotsensor 3a mit seinem Sensorbereich 30a (angedeutet durch gestrichelte Linien) durch die Frontseite 100 des Heizkörperthermostats weist und der zweite passive Infrarotsensor 3b mit seinem Sensorbereich 30b (gestrichelte Linien) durch einen Bereich 102 der Umfangsseite 101 des Heizkörperthermostats 1 misst. Dazu kann das Gehäuse 8 an entsprechender Stelle 102 im infraroten Messbereich des Sensors 3a, 3b wie bereits oben erwähnt transparent sein. Im Gehäuse 8 des Heizkörperthermostats 1 befindet sich auch ein Funkmittel 13, das dazu ausgebildet ist, mit einem Computer Daten über Funk in Kommunikation zu stehen.

Weiterhin ist der Regler 12 dargestellt, der in Form eines Stellmotors Kraft auf einen Ventilstift des Heizkörpers aufbringen kann. In der unteren Ansicht in Fig. 7 sind des Weiteren die stromversorgenden Batterien 11 zu sehen. Ebenso sind, wie in Fig. 7 und in Fig. 8 zu sehen, der Umgebungslichtsensor 4 sowie der Temperatur- und Luftfeuchtigkeitssensor 5, 5a auf der Platine 9 angeordnet. Ein Schallsensor 2 ist ebenso vom Gehäuse des Heizkörperthermostats umfasst. In diesem Beispiel ist der Schallsensor 2 auf einer zweiten Platine 9a angeordnet, die mit der ersten Platine 9 verbunden ist.

Der Umbau bestehender Heizkörper ist mit dem erfindungsgemäßen Heizköperthermostat 1 besonders einfach. Es müssen keine weiteren Komponenten, wie Sensoren, Regelvorrichtungen oder ähnlich im Raum angebracht werden, um den Heizkörper erfindungsgemäß zu steuern. Ebenso wenig ist eine Verkabelung von verschiedenen Komponenten eines Regelungssystems erforderlich.

## Patentansprüche

1. Heizkörperthermostat (1) zum automatischen Regeln der Temperatur eines Heizkörpers (17), wobei das Heizkörperthermostat (1) dazu vorgesehen und eingerichtet ist, an einem Heizkörperventil (170) angebracht zu werden, aufweisend ein Gehäuse (8), wobei zumindest die folgenden Komponenten von dem Gehäuse (8) umfasst werden:
- Ein Verbindungsmittel (7), das dazu ausgebildet ist, das Heizkörperthermostat (1) mit dem Heizkörperventil (170) in Verbindung zu bringen, so dass das Heizkörperventil (170) durch das Heizkörperthermostat (1) steuerbar ist,
- ein Regler (12) für das Heizkörperventil (170) zum Regeln der Heizleistung eines Heizkörpers (17),
- ein Anwesenheitssensor (18),
- zumindest ein Temperatursensor (5), der dazu ausgebildet ist, eine Umgebungstemperatur zu ermitteln,
- wobei das Heizkörperthermostat (1) dazu eingerichtet ist, die ermittelten Sensordaten des Anwesenheitssensors (18) und die ermittelten Sensordaten des Temperatursensors (5) an einen Computer (14) zu übermitteln, und von diesem Computer (14) Steuerbefehle für eine prädiktive Steuerung eines Heizkörpers (17) zu empfangen oder wobei das Heizkörperthermostat (1) dazu eingerichtet ist, anhand der ermittelten Sensordaten des Anwesenheitssensors (18) und der ermittelten Sensordaten des Temperatursensors (5) Steuerbefehle für eine prädiktive Steuerung eines Heizkörpers (17) zu bestimmen,
**dadurch gekennzeichnet, dass** der Anwesenheitssensor zumindest einen Schallsensor (2) aufweist, so dass eine Anwesenheit einer Person in einer für das Heizkörperthermostat (1) sichtverdeckten Umgebung des Heizkörperthermostats (1) ermittelt werden kann.

2. Heizkörperthermostat gemäß Anspruch 1, **dadurch gekennzeichnet, dass** das Heizkörperthermostat (1) zumindest einen passiven Infrarotsensor (3) aufweist, wobei insbesondere der Anwesenheitssensor (18) den passiven Infrarotsensor (3) aufweist.

3. Heizkörperthermostat gemäß einem der Ansprüche 1 oder 2, **dadurch gekennzeichnet, dass** das Heizkörperthermostat (1) zumindest einen Lichtsensor (4) aufweist, wobei der Lichtsensor (4) insbesondere dazu ausgebildet ist, Licht im Wellenlängenbereich zwischen 400 nm und 700 nm zu erfassen, wobei insbesondere der Anwesenheitssensor (18) den Lichtsensor (4) aufweist.

4. Heizkörperthermostat gemäß einem der vorhergehenden Ansprüche, **dadurch gekennzeichnet, dass** das Gehäuse (8) eine Energiequelle (11) umfasst, wobei die Energiequelle insbesondere eine Batterie und/oder einen Akku aufweist oder dass die Energiequelle (8) ein Thermoelement oder ein thermoelektrischen Generator aufweist, wobei das Thermoelement oder der thermoelektrische Generator dazu ausgebildet ist, das Heizkörperthermostat (1) mit Energie aus der Wärme des Heizkörpers (17) zu versorgen.

5. Heizkörperthermostat gemäß einem der vorhergehenden Ansprüche, **dadurch gekennzeichnet, dass** das Gehäuse (8) zumindest einen Luftfeuchtigkeitssensor (5a) aufweist, wobei insbesondere der Temperatursensor (5) den Luftfeuchtigkeitssensor (5a) aufweist.

6. Heizkörperthermostat gemäß einem der vorhergehenden Ansprüche, **dadurch gekennzeichnet, dass** das Gehäuse (8) ein Funkmittel (13) zum Übertragen der Sensordaten des Anwesenheitssensors (18) und/oder der Sensordaten des Temperatursensors (5) und insbesondere zum Übertragen von Sensordaten des Schallsensors (2), des passiven Infrarotsensors (3), des Lichtsensors (4) und/oder des Luftfeuchtigkeitssensors (5a), an einen externen Computer (14) aufweist.

7. Heizkörperthermostat nach einem der vorhergehenden Ansprüche, **dadurch gekennzeichnet, dass** das Verbindungsmittel (7) dazu eingerichtet ist, eine mechanische Verbindung zu einem Heizkörperventil (170) herzustellen, wobei insbesondere das Verbindungsmittel (7) ein Schraub- oder Rastmittel aufweist, mit dem das Heizkörperthermostat (1) direkt an einem entsprechenden Gegenstück eines Heizkörperventils (170) befestigt werden kann.

8. Heizkörperthermostat gemäß einem der vorhergehenden Ansprüchen, **dadurch gekennzeichnet, dass** der Regler (12) dazu eingerichtet ist, eine Kraft auf ein Betätigungselement des Heizkörperventils auszuüben, mit der die Heizleistung eines Heizkörpers (17) über die Betätigung des Heizkörperventils (170) gesteuert wird.

9. Heizkörperthermostat gemäß Anspruch 2, wobei das Heizkörperthermostat (1) eine Frontseite (100) und eine Umfangsseite (101) aufweist, wobei die Frontseite (100) und die Umfangsseite (101) in unterschiedliche Richtungen weisen, wobei der zumindest eine passive Infrarotsensor (3, 3a, 3b) so angeordnet ist, dass ein Sensorbereich (30a, 30b) des passiven Infrarotsensors (3, 3a, 3b) sich durch die Frontseite (100) hindurch oder durch einen Bereich (102) der Umfangsseite (101) hindurch erstreckt.

10. Heizkörperthermostat gemäß Anspruch 2 oder 9, **dadurch gekennzeichnet, dass** das Heizkörperthermostat (1) zwei passive Infrarotsensoren (3a, 3b) aufweist, deren Sensorbereiche (30a, 30b) in unterschiedliche Richtungen weisen, wobei die Sensorbereiche (30a, 30b) insbesondere in 90° unterschiedliche Richtungen weisen, wobei sich insbesondere ein erster Sensorbereich (30a) eines ersten Sensors (3a) der zwei passiven Infrarotsensoren (3a, 3b) durch die Frontseite (100) und ein zweiter Sensorbereich (30b) eines zweiten Sensors (3b) der zwei passiven Infrarotsensoren (3a, 3b) durch einen Bereich (102) der Umfangsseite (101) erstreckt.

11. Heizungssystem, aufweisend zumindest einen Heizkörper (17) mit einem Heizkörperthermostat (1) nach einem der vorhergehenden Ansprüche, sowie einen externen Computer (14), **dadurch gekennzeichnet, dass** das Heizkörperthermostat (1) und der Computer (14) dazu ausgebildet sind, über Funk Daten auszutauschen, wobei die Daten zumindest die Sensordaten des Anwesenheitssensors (18) und/oder des Temperatursensors (5) umfassen, und wobei der Computer (14) dazu ausgebildet ist, anhand der Sensordaten einen insbesondere dynamischen Heizkalender für zukünftige Zeitpunkte insbesondere selbstständig zu erlernen und zu erstellen und Steuerbefehle an das Heizkörperthermostat (1) per Funk zu übermitteln.

12. Heizungssystem gemäß Anspruch 11, **dadurch gekennzeichnet, dass** das Heizkörperthermostat (1) so mit dem Heizkörper (17) in Verbindung steht, dass der Regler (12) des Heizkörperthermostats (1) eine Kraft und/oder ein Drehmoment zum Regeln der Heizleistung des Heizkörpers (17) auf ein Betätigungselement des Heizkörperventils (170) des Heizkörpers (17) aufbringen kann.

13. Heizungssystem gemäß Anspruch 11 oder 12, **dadurch gekennzeichnet, dass** der Computer (14) eine Software aufweist, wobei die Software dazu eingerichtet ist, die folgenden Schritte auszuführen oder Komponenten zu steuern, wenn sie auf dem Computer (14) ausgeführt wird:
- Regelmäßiges Überprüfen einer Anwesenheit einer Person in einer Umgebung des Heizkörperthermostats (1) mit dem Anwesenheitssensor (18), wobei das regelmäßige Überprüfen insbesondere genau einmal pro Minute für weniger als eine Sekunde durchgeführt wird,
- Übermitteln der Sensordaten des Anwesenheitssensors (18) an den Computer (14), insbesondere per Funk,
- Ermitteln einer Anwesenheitswahrscheinlichkeit einer Person in der Umgebung des Heizkörperthermostats (1) für zumindest einen, insbesondere 15 min bis 60 min, 24 Stunden, eine Woche oder einen Monat in der Zukunft liegenden Zeitpunkt anhand der Sensordaten des Anwesenheitssensors (18) durch den Computer (14),
- Bestimmen und Übermitteln eines von dem Computer (14) generierten Steuerbefehls an das Heizkörperthermostat (1) zum Regeln des Heizkörpers (17) mit dem Heizkörperthermostat (1), wobei der Heizkörper (17) so geregelt wird, dass beim Erreichen des vordefinierten zukünftigen Zeitpunkts, eine vordefinierte Temperatur im Raum herrscht, wobei insbesondere die vordefinierte Temperatur in Abhängigkeit der Anwesenheitswahrscheinlichkeit und einer vordefinierten Anwesenheits- und/oder vordefinierten Abwesenheitstemperatur ermittelt wird.

14. Computerprogramm zum automatischen Regeln eines Heizkörpers (17) mit einem Heizkörperthermostat (1) gemäß einem der Ansprüche 1 bis 10, und insbesondere mit einem Heizungssystem gemäß einem der Ansprüche 11 bis 13, wobei das Computerprogramm Computerprogrammcode aufweist, und folgende Schritte ausführt oder Komponenten steuert, wenn das Computerprogramm auf einem Computer (14) ausgeführt wird:
- Regelmäßiges Überprüfen einer Anwesenheit einer Person in einer Umgebung des Heizkörperthermostats (1) mit dem Anwesenheitssensor (18), wobei das regelmäßige Überprüfen insbesondere genau einmal pro Minute für weniger als eine Sekunde durchgeführt wird,
- Übermitteln der Sensordaten des Anwesenheitssensors (18) an den Computer (14), insbesondere per Funk,
- Ermitteln einer Anwesenheitswahrscheinlichkeit einer Person in der Umgebung des Heizkörperthermostats (1) für zumindest einen, insbesondere 15 min bis 60 min, 24 Stunden, eine Woche oder einen Monat in der Zukunft liegenden Zeitpunkt anhand der Sensordaten des Anwesenheitssensors (18) durch den Computer (14),
- Bestimmen und Übermitteln eines von dem Computer (14) erzeugten Steuerbefehls an das Heizkörperthermostat (1) zum Regeln des Heizkörpers (17) mit dem Heizkörperthermostat (1), wobei der Heizkörper (17) so geregelt wird, dass beim Erreichen des vordefinierten zukünftigen Zeitpunkts, eine vordefinierte Temperatur im Raum herrscht, wobei insbesondere die vordefinierte Temperatur in Abhängigkeit der Anwesenheitswahrscheinlichkeit und einer vordefinierten Anwesenheits- und/oder vordefinierten Abwesenheitstemperatur ermittelt wird.

## Claims

1. A radiator thermostat (1) for automatically regulating the temperature of a radiator (17), wherein the radiator thermostat (1) is provided and configured to be attached to a radiator valve (170) having a housing (8), wherein the housing (8) comprises at least the following components:
- a connecting means (7) that is designed to connect the radiator thermostat (1) to the radiator valve (170) so that the radiator valve (170) can be controlled by the radiator thermostat (1),
- a regulator (12) for the radiator valve (170) for regulating the heat output of a radiator (17),
- a presence sensor (18),
- at least one temperature sensor (5) that is designed to determine an environmental temperature,
- wherein the radiator thermostat (1) is configured to transmit the determined sensor data from the presence sensor (18) and the determined sensor data from the temperature sensor (5) to a computer (14), and to receive control commands from this computer (14) for predictively controlling a radiator (17), or wherein the radiator thermostat (1) is configured to determine control commands for a predictively controlling a radiator (17) using the determined sensor data from the presence sensor (18) and the determined sensor data from the temperature sensor (5),
**characterized in that** the presence sensor has at least one acoustic sensor (2) so that a presence of a person in an environment of the radiator thermostat (1) that is visually concealed for the radiator thermostat (1) can be determined.

2. The radiator thermostat according to claim 1, **characterized in that** the radiator thermostat (1) has at least one passive infrared sensor (3), wherein in particular the presence sensor (18) has the passive infrared sensor (3).

3. The radiator thermostat according to one of claims 1 or 2, **characterized in that** the radiator thermostat (1) has at least one light sensor (4), wherein the light sensor (4) is designed in particular to detect light within a wavelength range between 400 nm and 700 nm, wherein in particular the presence sensor (18) has the light sensor (4).

4. The radiator thermostat according to one of the preceding claims, **characterized in that** the housing (8) comprises an energy source (11), wherein the energy source has in particular a battery and/or an accumulator, or the energy source (8) has a thermocouple or a thermoelectric generator, wherein the thermocouple or the thermoelectric generator is designed to supply the radiator thermostat (1) with energy from the heat of the radiator (17).

5. The radiator thermostat according to one of the preceding claims, **characterized in that** the housing (8) has at least one humidity sensor (5a), wherein in particular the temperature sensor (5) has the humidity sensor (5a).

6. The radiator thermostat according to one of the preceding claims, **characterized in that** the housing (8) has a radio means (13) for transmitting the sensor data from the presence sensor (18) and/or the sensor data from the temperature sensor (5), an in particular to transmit sensor data from the acoustic sensor (2), from the passive infrared sensor (3), from the light sensor (4) and/or from the humidity sensor (5a) to an external computer (14).

7. The radiator thermostat according to one of the preceding claims, **characterized in that** the connecting means (7) is configured to establish a mechanical connection to a radiator valve (170), wherein in particular the connecting means (7) has a screwing or latching means, by means of which the radiator thermostat (1) can be fastened directly to a corresponding mating piece of a radiator valve (170).

8. The radiator thermostat according to one of the preceding claims, **characterized in that** the regulator (12) is configured to exert a force on an actuating element of the radiator valve by means of which the heat output of a radiator (17) is controlled by the actuation of the radiator valve (170).

9. The radiator thermostat according to claim 2, wherein the radiator thermostat (1) has a front side (100) and a peripheral side (101), wherein the front side (100) and the peripheral side (101) face in different directions, wherein the at least one passive infrared sensor (3, 3a, 3b) is arranged such that a sensor range (30a, 30b) of the passive infrared sensor (3, 3a, 3b) extends through the front side (100), or through a region (102) of the peripheral side (101).

10. The radiator thermostat according to claim 2 or 9, **characterized in that** the radiator thermostat (1) has two passive infrared sensors (3a, 3b) whose sensor ranges (30a, 30b) face in different directions, wherein the sensor ranges (30a, 30b) face in particular in directions that differ by 90°, wherein in particular a first sensor range (30a) of a first sensor (3a) of the two passive infrared sensors (3a, 3b) extends through the front side (100) and a second sensor range (30b) of a second sensor (3b) of the two passive infrared sensors (3a, 3b) extends through a region (102) in the peripheral side (101).

11. A heating system having at least one radiator (17) with a radiator thermostat (1) according to one of the preceding claims as well as an external computer (14), **characterized in that** the radiator thermostat (1) and the computer (14) are designed to exchange data via radio, wherein the data comprise at least the sensor data of the presence sensor (18) and/or the temperature sensor (5), and wherein the computer (14) is designed to learn and create an in particular dynamic heating calendar using the sensor data for a future point in time, in particular independently, and to transmit control commands to the radiator thermostat (1) by radio.

12. The heating system according to claim 11, **characterized in that** the radiator thermostat (1) is connected to the radiator (17) such that the regulator (12) of the radiator thermostat (1) can apply a force and/or a torque to control the heat output of the radiator (17) to an actuating element of the radiator valve (170) of the radiator (17).

13. The heating system according to claim 11 or 12, **characterized in that** the computer (14) has a software, wherein the software is configured to execute the following steps or control components when it is run on the computer (14):
- regularly check, by the presence sensor (18), for the presence of a person in an environment of the radio thermostat (1), wherein the regular check is performed in particular precisely once a minute for less than one second,
- transmit the sensor data from the presence sensor (18) to the computer (14), in particular by radio,
- determine, by the computer (14), a probability of the presence of a person in the environment of the radiator thermostat (1) for at least one point in time lying in particular 15 minutes to 60 minutes, 24 hours, one week or one month in the future using the sensor data from the presence sensor (18),
- determine and transmit a control command generated by the computer (14) to the radiator thermostat (1) to regulate the radiator (17) by the radiator thermostat (1), wherein the radiator (17) is regulated such that, when the predefined future point in time is reached, a predefined temperature predominates in the room, wherein in particular the predefined temperature is determined depending on the presence probability and a predefined presence and/or predefined absence temperature.

14. A computer program for automatically regulating a radiator (17) with a radiator thermostat (1) according to one of claims 1 to 10, and in particular with a heating system according to one of claims 11 to 13, wherein the computer program has computer program code and executes the following steps or controls components when the computer program is run on a computer (14):
- regularly check, by the presence sensor (18), for the presence of a person in an environment of the radio thermostat (1), wherein the regular checking is performed in particular precisely once a minute for less than one second,
- transmit the sensor data from the presence sensor (18) to the computer (14), in particular by radio,
- determine, by the computer (14), a probability of the presence of a person in the environment of the radiator thermostat (1) for at least one point in time lying in particular 15 minutes to 60 minutes, 24 hours, one week or one month in the future using the sensor data from the presence sensor (18),
- determine and transmit a control command produced by the computer (14) to the radiator thermostat (1) to regulate the radiator (17) by the radiator thermostat (1), wherein the radiator (17) is regulated such that, when the predefined future point in time is reached, a predefined temperature predominates in the room, wherein in particular the predefined temperature is determined depending on the presence probability and a predefined presence and/or predefined absence temperature.

## Revendications

1. Thermostat de radiateur (1) pour la régulation automatique de la température d'un radiateur (17), le thermostat de radiateur (1) étant prévu et conçu pour être fixé sur une vanne de radiateur (170), comportant un boîtier (8), le boîtier (8) comportant au moins les composants suivants :
- un moyen de connexion (7) conçu pour connecter le thermostat de radiateur (1) à la vanne de radiateur (170) de manière à ce que la vanne de radiateur (170) puisse être commandée par le thermostat de radiateur (1),
- un régulateur (12) pour la vanne de radiateur (170), destiné à réguler la puissance thermique d'un radiateur (17),
- un capteur de présence (18),
- au moins un capteur de température (5) conçu pour déterminer une température ambiante,
- le thermostat de radiateur (1) étant conçu pour transmettre les données de capteur déterminées du capteur de présence (18) et les données de capteur déterminées du capteur de température (5) à un ordinateur (14), et pour recevoir des ordres de commande de cet ordinateur (14) pour une commande prédictive d'un radiateur (17), et le thermostat de radiateur (1) étant conçu pour définir des ordres de commande pour une commande prédictive d'un radiateur (17) à l'aide des données de capteur déterminées du capteur de présence (18) et des données de capteur déterminées du capteur de température (5),
**caractérisé en ce que** le capteur de présence présente au moins un capteur acoustique (2), de manière à pouvoir déterminer une présence d'une personne dans un environnement du thermostat de radiateur (1) non visible pour le thermostat de radiateur (1).

2. Thermostat de radiateur selon la revendication 1, **caractérisé en ce que** le thermostat de radiateur (1) présente au moins un capteur infrarouge passif (3), le capteur de présence (18) présentant notamment le capteur infrarouge passif (3).

3. Thermostat de radiateur selon l'une des revendications 1 ou 2, **caractérisé en ce que** le thermostat de radiateur (1) présente au moins un capteur de lumière (4), le capteur de lumière (4) étant notamment conçu pour détecter de la lumière dans la plage de longueur d'onde comprise entre 400 nm et 700 nm, le capteur de présence (18) présentant notamment le capteur de lumière (4).

4. Thermostat de radiateur selon l'une des revendications précédentes, **caractérisé en ce que** le boîtier (8) comporte une source d'énergie (11), la source d'énergie présentant notamment une batterie et/ou une pile ou **en ce que** la source d'énergie (8) présente un élément thermique ou un générateur thermoélectrique, l'élément thermique ou le générateur thermoélectrique étant conçu pour alimenter le thermostat de radiateur (1) en énergie en utilisant la chaleur du radiateur (17).

5. Thermostat de radiateur selon l'une des revendications précédentes, **caractérisé en ce que** le boîtier (8) présente au moins un capteur d'humidité de l'air (5a), le capteur de température (5) présentant notamment le capteur d'humidité de l'air (5a).

6. Thermostat de radiateur selon l'une des revendications précédentes, **caractérisé en ce que** le boîtier (8) présente un moyen radio (13) pour la transmission des données de capteur du capteur de présence (18) et/ou des données de capteur du capteur de température (5) et notamment pour la transmission de données de capteur du capteur acoustique (2), du capteur infrarouge passif (3), du capteur de lumière (4) et/ou du capteur d'humidité de l'air (5a), à un ordinateur externe (14).

7. Thermostat de radiateur selon l'une des revendications précédentes, **caractérisé en ce que** le moyen de connexion (7) est conçu pour établir une connexion mécanique avec une vanne de radiateur (170), le moyen de connexion (7) présentant notamment un moyen de vissage ou d'encliquetage, avec lequel le thermostat de radiateur (1) peut être fixé directement à une contre-pièce correspondante d'une vanne de radiateur (170).

8. Thermostat de radiateur selon l'une des revendications précédentes, **caractérisé en ce que** le régulateur (12) est conçu pour exercer une force sur un élément d'actionnement de la vanne de radiateur, avec laquelle la puissance thermique d'un radiateur (17) est commandée par actionnement de la vanne de radiateur (170).

9. Thermostat de radiateur selon la revendication 2, dans lequel le thermostat de radiateur (1) présente une face avant (100) et une face périphérique (101), la face avant (100) et la face périphérique (101) étant orientées dans différentes directions, l'au moins un capteur infrarouge passif (3, 3a, 3b) étant agencé de telle façon qu'une zone de capteur (30a, 30b) du capteur infrarouge passif (3, 3a, 3b) s'étend à travers la face avant (100) ou à travers une zone (102) de la face périphérique (101).

10. Thermostat de radiateur selon la revendication 2 ou 9, **caractérisé en ce que** le thermostat de radiateur (1) présente deux capteurs infrarouges passifs (3a, 3b), dont les zones de capteur (30a, 30b) sont orientées dans différentes directions, les zones de capteur (30a, 30b) étant notamment orientées dans des directions différentes de 90°, dans lequel une première zone de capteur (30a) d'un premier capteur (3a) parmi les deux capteurs infrarouges passifs (3a, 3b) s'étend notamment à travers la face avant (100) et une deuxième zone de capteur (30b) d'un deuxième capteur (3b) parmi les deux capteurs infrarouges passifs (3a, 3b) s'étend à travers une zone (102) de la face périphérique (101).

11. Système de chauffage présentant au moins un radiateur (17) avec un thermostat de radiateur (1) selon l'une des revendications précédentes, ainsi qu'un ordinateur externe (14), **caractérisé en ce que** le thermostat de radiateur (1) et l'ordinateur (14) sont conçus pour échanger des données par radio, les données comportant au moins les données de capteur du capteur de présence (18) et/ou du capteur de température (5), et dans lequel l'ordinateur (14) est conçu pour acquérir et établir notamment par lui-même un calendrier de chauffage notamment dynamique pour des moments futurs à l'aide des données de capteur, et pour transmettre des ordres de commande au thermostat de radiateur (1) par radio.

12. Système de chauffage selon la revendication 11, **caractérisé en ce que** le thermostat de radiateur (1) est connecté de telle façon avec le radiateur (17), que le régulateur (12) du thermostat de radiateur (1) peut appliquer une force et/ou un couple de rotation à un élément d'actionnement de la vanne de radiateur (170) du radiateur (17) pour réguler la puissance thermique du radiateur (17).

13. Système de chauffage selon la revendication 11 ou 12, **caractérisé en ce que** l'ordinateur (14) présente un logiciel, le logiciel étant conçu pour exécuter les étapes suivantes ou pour commander les composants suivants, lorsque celui-ci est exécuté sur l'ordinateur (14) :
- vérification régulière d'une présence d'une personne dans un environnement du thermostat de radiateur (1) avec le capteur de présence (18), la vérification régulière étant effectuée précisément une fois par minute pendant moins d'une seconde,
- transmission des données de capteur du capteur de présence (18) à l'ordinateur (14), en particulier par radio,
- détermination de la probabilité de présence d'une personne dans l'environnement du thermostat de radiateur (1) pour au moins un moment dans 15 à 60 minutes, dans 24 heures, dans une semaine ou dans un mois, à l'aide des données de capteur du capteur de présence (18), par l'ordinateur (14),
- définition et transmission d'un ordre de commande généré par l'ordinateur (14) au thermostat de radiateur (1) pour réguler le radiateur (17) avec le thermostat de radiateur (1), le radiateur (17) étant régulé de manière à ce qu'une température prédéfinie règne dans la pièce lors de l'atteinte du moment futur prédéfini, la température prédéfinie étant déterminée en particulier en fonction de la probabilité de présence et d'une température de présence prédéfinie et/ou d'absence prédéfinie.

14. Programme informatique pour la régulation automatique d'un radiateur (17) avec un thermostat de radiateur (1) selon l'une des revendications 1 à 10, et en particulier avec un système de chauffage selon l'une des revendications 11 à 13, le programme informatique présentant un code de programme informatique, et exécutant les étapes suivantes ou commandant les composants suivants, lorsque le programme informatique est exécuté sur un ordinateur (14) :
- vérification régulière d'une présence d'une personne dans un environnement du thermostat de radiateur (1) avec le capteur de présence (18), la vérification régulière étant notamment effectuée précisément une fois par minute pendant moins d'une seconde,
- transmission des données de capteur du capteur de présence (18) à l'ordinateur (14), en particulier par radio,
- détermination de la probabilité de présence d'une personne dans l'environnement du thermostat de radiateur (1) pour au moins un moment dans 15 à 60 minutes, dans 24 heures, dans une semaine ou dans un mois, à l'aide des données de capteur du capteur de présence (18), par l'ordinateur (14),
- définition et transmission d'un ordre de commande généré par l'ordinateur (14) au thermostat de radiateur (1) pour réguler le radiateur (17) avec le thermostat de radiateur (1), le radiateur (17) étant régulé de manière à ce qu'une température prédéfinie règne dans la pièce lors de l'atteinte du moment futur prédéfini, la température prédéfinie étant notamment déterminée en fonction de la probabilité de présence et d'une température de présence prédéfinie et/ou d'absence prédéfinie.
